# EUROPEAN PATENT SPECIFICATION

(11) **EP 1 574 409 B1**
(45) Date of publication and mention of the grant of the patent: **21.11.2007**
(21) Application number: 04100961.4
(22) Date of filing: 09.03.2004
(51) Int. Cl.: B60S 1/04

(54) **A windscreen wiper arm**
Ein Wischerarm
Un bras d'essuie-glace

(43) Date of publication of application: 14.09.2005
(73) Proprietor: Federal-Mogul S.A., 6790 Aubange (BE)
(72) Inventor: Butcher, Keith, 6790, Aubange (BE); Gilli, Marco, 6790, Aubange (BE); Orjela, Gurdev, 6790, Aubange (BE)
(74) Representative: Hooiveld, Arjen Jan Winfried

(56) References cited:
- WO-A-03/000524
- FR-A- 2 375 074
- US-B1- 6 353 961
- US-B1- 6 637 801
- US-B1- 6 683 292
- PATENT ABSTRACTS OF JAPAN vol. 018, no. 479 (M-1669), 7 September 1994 (1994-09-07) -& JP 06 156198 A (PIAAZU CORP:YUGEN), 3 June 1994 (1994-06-03)
- PATENT ABSTRACTS OF JAPAN vol. 013, no. 542 (M-901), 5 December 1989 (1989-12-05) & JP 01 223052 A (YOSHIMORI KATOU), 6 September 1989 (1989-09-06)

## Description

The present invention relates to a windscreen wiper arm to be mounted on a rear side of a vehicle, particularly an automobile, comprising a mounting head mountable on a drive shaft and an arm member pivotally connected to the mounting head by means of a pivot pin. Particularly, the arm member has a substantially U-shaped cross-section near side pivot pin comprising two side walls, wherein a part of the mounting head extends between the side walls and beyond said pivot pin.

Such a windscreen wiper arm is generally known. Nowadays for safety reasons automobiles are provided on their rear side with several lights, such as taillights and brakelights, particularly in order to make rear traffic aware of the fact that an automobile participates in traffic (taillights) or that a dangerous road situation may occur due to a braking action (brake lights). Obviously, complex machinery, tools etcetera are needed to equip each type of automobile with such lights, with all the expenses involved.

A wiper arm of the type described above is known from document WO 03/00524 A whereby a light source is provided on the arm member. This has the advantage that at minimum costs - without complex machinery and additional tools - each type of automobile can be equipped with taillights and brakelights, and/or with (an) additional light (s) .

Further it has the merit invention that electrical means already existing in the automobile and enabling the windscreen wiper arm to carry out its oscillating movement, can also be used for (a) light(s) at the rear side of the automobile. In other words, (a) light(s) are created on the rear side of an automobile at the location where electrical means, such as electrical supplies, electrical connections etcetera, are already present therein.

According to the invention the light source is provided on the mounting head near a mounting location for the drive shaft. This has the advantage that when the windscreen wiper arm carries out its oscillating movement, the light source does not move accordingly, i.e. is stationary.

In a preferred embodiment of a windscreen wiper arm in accordance with the invention the light source is part of a taillight. In the alternative, the light source is part of a brakelight. Particularly, said brakelight is a third brakelight of the automobile.

In another preferred embodiment of a windscreen wiper arm according to the invention the taillight or the brakelight is integrated in the windscreen wiper arm.

The invention also relates to a windscreen wiper device comprising a windscreen wiper arm according to the invention. Particularly, said windscreen wiper device comprises an elastic, elongated carrier element, as well as an elongated wiper blade of a flexible material, which can be placed in abutment with a rear windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for the windscreen wiper arm in accordance with the invention.

The invention will now be explained in more detail with reference to figures illustrated in a drawing, wherein:
- Figure 1 is a perspective, schematic view of a preferred embodiment of a windscreen wiper device equipped with a windscreen wiper arm according to the invention, wherein the windscreen wiper arm is in a wiping position;
- Figures 2 through 4 show details of the windscreen wiper device of Figure 1;
- Figure 5 is a bottom view of the windscreen wiper arm of Figure 1;

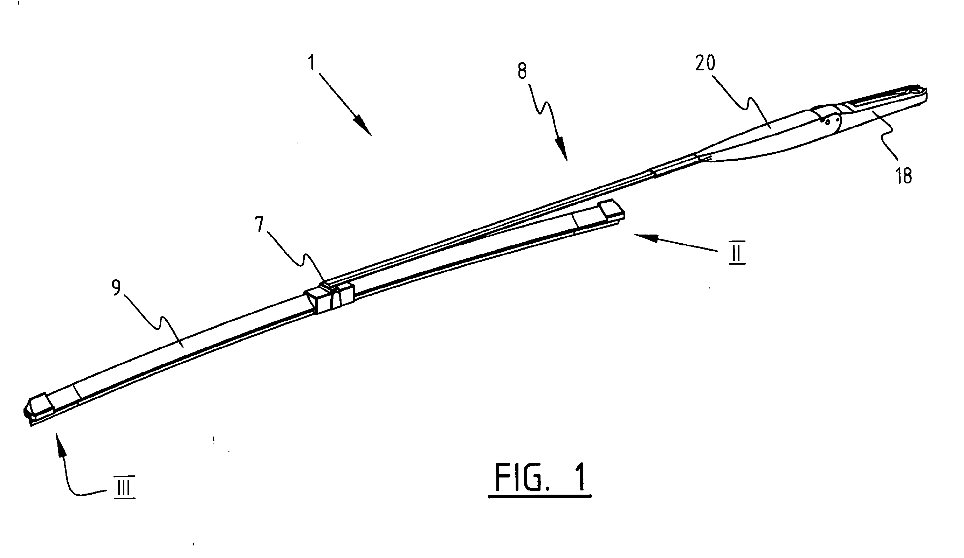

Figure 1 through 4 show a preferred variant of a windscreen wiper device 1 according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

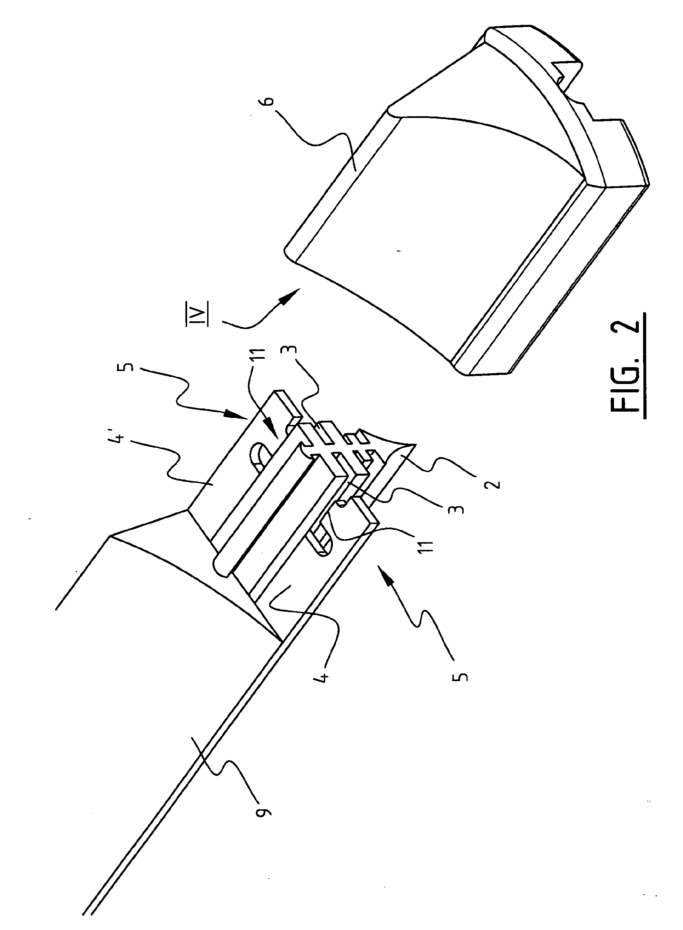

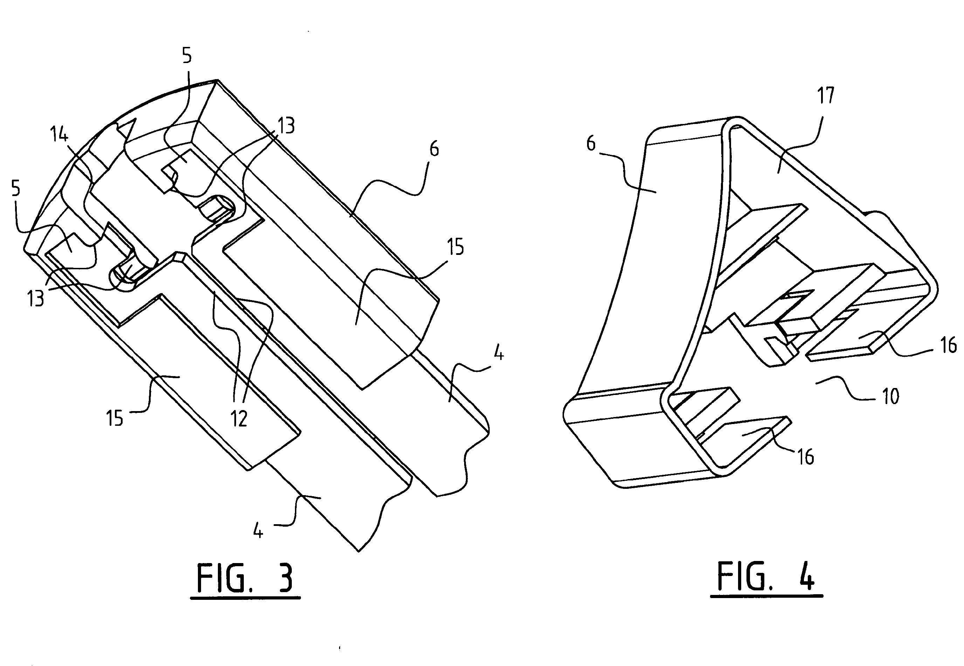

Figure 2 and 3 show a free end of the windscreen wiper device 1 of figure 1, whereas figure 4 reveals a bottom view of said free end without the wiper blade 2 being present. Corresponding parts have been designated with the same reference numerals. As can be seen from figure 4 (showing in perspective the connecting piece 6 as a separate constructional element), the connecting piece 6 is provided with an opening 10 in order to allow a relative movement of the wiper blade 2 along the strips 4 inside the connecting piece 6, so that said connecting piece 6 does not block the wiper blade 2 during use. The connecting pieces 6 are made of one piece of plastic.

With reference to figures 2 and 3, said strips 4 are each provided with a protrusion 11 extending laterally from a longitudinal interior edge 12 of the strips 4. When a connecting piece 6 is slidably mounted onto the neighbouring ends 5 of the strips 4, a snap or clicking connection is realized, wherein the protrusions 11 are snapped or clicked between stops 13 ("notches 13") inside the connecting piece 6. Each protrusion 11 rests in a small groove 14 between these opposing stops 13. Accordingly, the strips 4 are blocked against any movement in longitudinal direction with respect to the connecting pieces 6. Each connecting piece 6 is also provided with two engaging members 15 made integral therewith, wherein said engaging members 15 engage around the strips 4 so as to form a groove 16 for sliding the strips 4 therein. Said engaging members 15 ensure that the strips 4 are blocked against any movement in transversal direction with respect to the connecting pieces 6. Each connecting piece 6 has a cavity 17 to accommodate the free end of the spoiler 9.

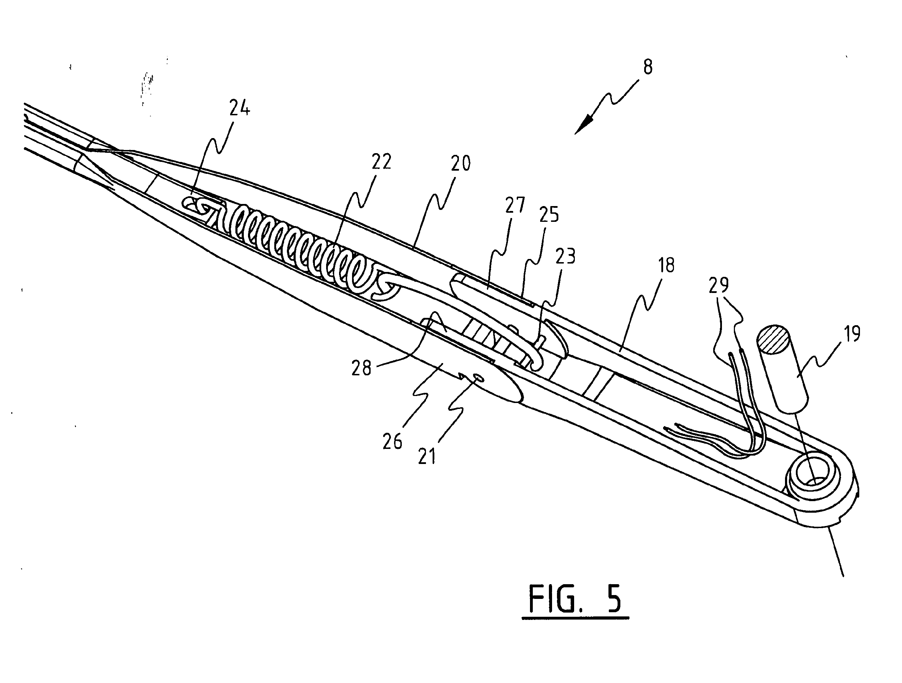

As illustrated in figure 5 the windscreen wiper arm 8 according to the invention comprises a plastic mounting head 18 which can be fixed for rotation to a shaft 19 driven, via a mechanism not illustrated, by a small motor. Said windscreen wiper arm 8 further comprises a plastic arm member 20 supported by the mounting head 18, wherein said arm member 20 in turn supports the wiper blade 2 with the help of the connecting device 7, as illustrated in figure 1. The arm member 20 is pivotally connected to the mounting head 18 by means of a pivot pin 21. A spring 22 is hooked with its first end on a pin 23 on the mounting head 18 and with its second end on to a part 24 of the arm member 20 in order to ensure that the arm member 20 and thus the wiper blade 2 connected thereto is pressed onto a windscreen to be wiped. In use, the shaft 19 rotates alternately in a clockwise and in a counterclockwise sense carrying the mounting head 18 into rotation also, which in turn draws the arm member 20 into rotation and by means of the connecting device 7 moves the wiper blade 2.

As illustrated, the arm member 20 has a substantially U-shaped cross-section near said pivot pin 21 comprising two side walls 25,26, wherein a part of the mounting head 18 extends between the side walls 25,26 and beyond said pivot pin 21. Said part is provided with opposite abutting surfaces 27,28 for abutting against the side walls 25,26. The mounting head 18 or both the arm member 20 and the mounting head 18 are provided with a taillight wiring 29 integrated therein. In order to avoid that the taillight carries out an oscillatory motion together with the mounting head 18 the taillight is mounted near the location of the shaft 19.

The invention is not restricted to the embodiment shown, but extends also to other embodiments falling within the scope of the appended claims.

## Claims

1. A windscreen wiper arm (8) to be mounted on a rear side of a vehicle, particularly an automobile, comprising a mounting head (18) mountable on a drive shaft (19) and an arm member (20) pivotally connected to the mounting head (18) by means of a pivot pin (21), wherein said windscreen wiper arm (8) is provided with at least one light source, **characterized in that** the light source is provided on the mounting head (18) near a mounting location for the drive shaft (19).

2. A windscreen wiper arm (8) according to claim 1, wherein the light source is part of a taillight (30).

3. A windscreen wiper arm (8) according to claim 1, wherein the light source is part of a brakelight.

4. A windscreen wiper arm (8) according to claim 3, wherein the brakelight is a third brakelight of the vehicle.

5. A windscreen wiper arm (8) according to claim 2, 3 or 4, wherein the taillight (30) or the brakelight is integrated in the windscreen wiper arm (8).

6. A windscreen wiper device (1) comprising a windscreen wiper arm (8) according to any of the preceding claims 1 through 5.

7. A windscreen wiper device (1) according to claim 6, wherein it comprises an elastic, elongated carrier element, as well as an elongated wiper blade (2) of a flexible material, which can be placed in abutment with a rear windscreen to be wiped, which wiper blade (2) includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respective connecting piece (6), which windscreen wiper device comprises a connecting device (7) for the windscreen wiper arm (8) according to any of the preceding claims 1 through 5.

## Patentansprüche

1. Scheibenwischerarm (8), der an die Rückseite eines Fahrzeugs, insbesondere eines Automobils, zu montieren ist, umfassend einen Montagekopf (18), montierbar auf einer Antriebswelle (19), und ein Armelement (20), mittels eines Drehzapfens (21) drehbar mit dem Montagekopf (18) verbunden, wobei der Scheibenwischerarm (8) mit wenigstens einer Lichtquelle versehen ist,
**dadurch gekennzeichnet, dass** die Lichtquelle auf dem Montagekopf (18) nahe einer Montagestelle für die Antriebswelle (19) bereitgestellt ist.

2. Scheibenwischerarm (8) nach Anspruch 1, wobei die Lichtquelle Teil eines Rücklichts (30) ist.

3. Scheibenwischerarm (8) nach Anspruch 1, wobei die Lichtquelle Teil eines Bremslichts ist.

4. Scheibenwischerarm (8) nach Anspruch 3, wobei das Bremslicht ein drittes Bremslicht des Fahrzeugs ist.

5. Scheibenwischerarm (8) nach Anspruch 2, 3 oder 4, wobei das Rücklicht (30) oder das Bremslicht in den Scheibenwischerarm (8) integriert ist.

6. Scheibenwischervorrichtung (1), einen Scheibenwischerarm (8) nach einem der vorhergehenden Ansprüche 1 bis einschließlich 5 umfassend.

7. Scheibenwischervorrichtung (1) nach Anspruch 6, wobei sie ein elastisches längliches Trägerelement sowie ein längliches Wischerblatt (2) aus einem flexiblen Material, das anliegend an eine zu wischende hintere Windschutzscheibe platziert werden kann, umfasst, wobei das Wischerblatt (2) auf seinen Längsseiten gegenüberliegende Längsnuten (3) enthält und in den Nuten beabstandete Längsstreifen (4) des Trägerelements angeordnet sind, wobei benachbarte Enden (5) der Längsstreifen (4) durch ein jeweiliges Verbindungsstück (6) miteinander verbunden sind und das Scheibenwischerblatt eine Verbindungseinrichtung (7) für den Scheibenwischerarm (8) nach einem der vorhergehenden Ansprüche 1 bis einschließlich 5 umfasst.

## Revendications

1. Bras d'essuie-glace (8) à monter à l'arrière d'un véhicule, notamment d'une automobile, ledit bras d'essuie-glace comprenant une tête de montage (18), qui peut être montée sur une arbre d'entraînement (19), et un élément formant bras (20) qui est raccordé, au moyen d'un pivot (21), à la tête de montage (18) de façon à pouvoir pivoter, ledit bras d'essuie-glace(8) étant doté d'au moins une source lumineuse, **caractérisé en ce que** la source lumineuse est prévue sur la tête de montage (18) près d'un emplacement de montage de l'arbre d'entraînement (19).

2. Bras d'essuie-glace (8) selon la revendication 1, dans lequel la source lumineuse fait partie d'un feu arrière (30).

3. Bras d'essuie-glace (8) selon la revendication 1, dans lequel la source lumineuse fait partie d'un feu de freinage.

4. Bras d'essuie-glace (8) selon la revendication 3, dans lequel le feu de freinage est un troisième feu de freinage du véhicule.

5. Bras d'essuie-glace (8) selon la revendication 2, 3 ou 4, dans lequel le feu arrière (30) ou le feu de freinage est intégré dans le bras d'essuie-glace (8).

6. Dispositif d'essuie-glace (1) comprenant un bras d'essuie-glace (8) selon l'une quelconque des revendications précédentes 1 à 5.

7. Dispositif d'essuie-glace (1) selon la revendication 6, lequel comprend un élément de support élastique allongé, ainsi qu'une lame d'essuie-glace allongée (2) en matériau flexible, qui peut être placée en appui contre une lunette arrière à essuyer, ladite lame d'essuie-glace (2) incluant sur ses côtés longitudinaux des gorges longitudinales opposées (3) dans lesquelles sont disposées des bandes longitudinales espacées (4) de l'élément de support, des extrémités adjacentes (5) desdites bandes longitudinales (4) étant reliées entre elles par une pièce de liaison respective (6), le dispositif d'essuie-glace comprenant un dispositif (7) de liaison du bras d'essuie-glace (8) selon l'une quelconque des revendications précédentes 1 à 5.
